# EUROPÄISCHE PATENTSCHRIFT

(11) **EP 3 430 819 B1**
(45) Veröffentlichungstag und Bekanntmachung des Hinweises auf die Patenterteilung: **29.01.2020**
(21) Anmeldenummer: 18710037.5
(22) Anmeldetag: 08.03.2018
(51) Int. Cl.: H04R 1/10, H04R 5/027

(54) **OHRHÖRER MIT GETRENNTEN MIKROFONEN FÜR BINAURALAUFNAHMEN UND ZUM TELEFONIEREN**
EARPHONES HAVING SEPARATE MICROPHONES FOR BINAURAL RECORDINGS AND FOR TELEPHONING
OREILLETTE À MICROPHONES SÉPARÉS POUR RECEVOIR DE MANIÈRE BINAURALE ET TÉLÉPHONER

(30) Priorität: 17.03.2017 DE 102017105767
(43) Veröffentlichungstag der Anmeldung: 23.01.2019
(73) Patentinhaber: Sennheiser electronic GmbH & Co. KG, 30900 Wedemark (DE)
(72) Erfinder: BOETCHER, Sven, 30900 Wedemark (DE); LANGE, Kai, 33613 Bielefeld (DE); FRESEN, Nicole, 31303 Burgdorf (DE); RÖSCHMANN-FOUDHAILI, Hatem, 30519 Hannover (DE)
(74) Vertreter: Eisenführ Speiser
(86) Internationale Anmeldenummer: PCT/EP2018/055743
(87) Internationale Veröffentlichungsnummer: WO 2018/166885

(56) Entgegenhaltungen:
- WO-A1-00/64216
- WO-A1-2016/013733
- US-A1- 2013 089 225
- US-A1- 2014 307 868

## Beschreibung

Die Erfindung betrifft einen Ohrhörer, insbesondere einen Ohrhörer mit mehreren Mikrofonen für Binauralaufnahmen.

### Hintergrund

Die Benutzung binauraler Ohrhörer oder Kopfhörer mit Mikrofonen für die Aufnahme stereophonischer oder binauraler Audiosignals ist bekannt. Das Stereo-Audiosignal kann an ein anderes Gerät ausgegeben werden, mit dem es dann aufgezeichnet werden kann. Gleichzeitig mit der Audioaufnahme kann ein Video aufgenommen werden, das mit der Audioaufnahme synchronisiert werden kann.

Aus US 2013/0089225 A ist ein Ohrhörer für binaurale Aufnahmen bekannt, der zwei Einheiten zur Schallwiedergabe sowie zwei Mikrofoneinheiten zur Detektion von Schallsignalen aufweist.

US 2006/0182287 A1 zeigt ein Audio-Monitoringsystem, bei dem mindestens ein Mikrofon an oder nahe bei einem Ohr eines Nutzers angeordnet ist, um Schallereignisse so aufzunehmen, wie sie der Nutzer beim normalen Hören wahrnimmt. Das Monitoringsystem enthält außerdem Ohrhörer, um den Schall zum Ohr des Nutzers zu bringen.

Aus US 3,969,583 ist eine Aufnahmetechnik mittels kopfbezogener Stereomikrofone bekannt.

US 4,088,849 offenbart einen Kopfhörer mit einem Paar von Wandlereinheiten, die jeweils ein Mikrofon und einen Lautsprecher enthalten.

Heutige Multimediageräte, so wie Smartphones, Tablets usw., weisen oft sowohl eine Telefonfunktion als auch eine Audioaufnahme- und/oder Audiowiedergabefunktion auf.

US 2014/0307868 A1 beschreibt einen Kopfhörer mit einem Mikrofon, das für Sprachsignale zum Telefonieren genutzt werden kann, sowie zwei weiteren Mikrofonen für Umgebungsschall, deren Signale während des Telefonierens abgeschaltet sind und in einem Umgebungsschall-Modus (ambient mode) auf die Hörer ausgegeben werden.

WO 00/64216 A1 zeigt ein Headset mit zwei Ohreinheiten sowie einer Anschlusseinheit. Ferner sind zwei Ambient-Mikrofone zur Erfassung von Außengeräuschen vorgesehen.

WO 2016/013733 A1 zeigt einen Kopfhörer mit zwei Ohrstücken sowie zwei Mikrofonen in der Zuleitung zu einem der Ohrstücke. Durch einen Schalter können ein oder zwei Mikrofone ein- oder ausgeschaltet werden. Die Mikrofone dienen der Störschallunterdrückung.

US 2013/089225 A1 zeigt einen Ohrhörer mit zwei Ambient-Mikrofonen zur Erfassung von Außengeräuschen.

### Zusammenfassung der Erfindung

Bei der Verwendung bekannter Ohrhörer mit Stereomikrofonen wurde festgestellt, dass diese eine verminderte Sprachqualität für die Telefonfunktion aufweisen. Eine Aufgabe der vorliegenden Erfindung besteht in der Bereitstellung eines Ohrhörers, der stereophonische Mikrofone aufweist und der besser zum Anschluss an ein Multimediagerät mit Telefonfunktion und Audioaufnahme- und/oder Audiowiedergabefunktion geeignet ist.

Die Aufgabe wird erfindungsgemäß durch den in Anspruch 1 angegebenen Ohrhörer gelöst. Erfindungsgemäß enthält ein Ohrhörer zum Anschluss an ein Multimediagerät, das für einen Telefonbetrieb und einen Audioaufnahme-/wiedergabebetrieb geeignet ist, zwei Ohr-Einheiten mit je mindestens einem Mikrofon zur binauralen Aufnahme von Umgebungsschall und einem Schallgeber, mindestens ein weiteres Mikrofon zur Erfassung von Sprache eines Nutzers, und eine Anschlusseinheit zum Anschluss des Ohrhörers an ein Multimediagerät. Dabei kann die Anschlusseinheit wahlweise Audiosignale der beiden Mikrofone zur Aufnahme von Umgebungsschall oder Audiosignale des weiteren Mikrofons zur Erfassung von Sprache ausgeben. Wenn das Multimediagerät in den Telefonbetrieb schaltet, schaltet der Ohrhörer automatisch in einen Modus, in dem die Anschlusseinheit die Audiosignale nur des weiteren Mikrofons zur Erfassung von Sprache ausgibt. Der Nutzer kann jedoch während des Telefonats zwischen diesem Mikrofon zur Erfassung von Sprache und den beiden Mikrofonen zur Aufnahme von Umgebungsschall umschalten. Wenn das Mikrofon zur Erfassung von Sprache benutzt wird, kann automatisch eine aktive Lärmkompensation (ANC) eingeschaltet werden, wobei die beiden Mikrofone zur Aufnahme von Umgebungsschall das Kompensationssignal liefern. Der Ohrhörer kann somit als Hör-/Sprechgarnitur (headset) benutzt werden.

Weitere vorteilhafte Ausführungsformen werden in den Ansprüchen 2 bis 14 beschrieben.

### Kurze Beschreibung der Zeichnungen

Weitere Einzelheiten und vorteilhafte Ausführungsformen sind in den Zeichnungen dargestellt. Darin zeigt
- Fig. 1: ein Flussdiagram verschiedener Funktionsmodi;
- Fig. 2: skizzierte Ansichten mehrerer verschiedener Ausführungsformen;
- Fig. 3: Ansichten exemplarischer Komponenten des Ohrhörers;
- Fig. 4: eine Ansicht einer exemplarischen Bedieneinheit;
- Fig. 5: eine exemplarische Gesamtansicht des Ohrhörers in einer Ausführungsform;
- Fig. 6: eine Ansicht einer exemplarischen Ohr-Einheit;
- Fig. 7: eine schematische Darstellung eines Ohrhörers mit ANC; und
- Fig. 8: eine exemplarische Gesamtansicht einer drahtlosen Ausführungsform.

### Detaillierte Beschreibung der Erfindung

Die Erfindung betrifft einen Ohrhörer, der geeignet ist zum Anschluss an ein Multimediagerät, das eine Telefonfunktion und mindestens eine Audiowiedergabefunktion aufweist, wie z. B. ein Smartphone. Der Ohrhörer enthält zwei im oder am Ohr zu tragende Ohr-Einheiten, die jeweils mindestens einen elektro-akustischen Wandler als Schallgeber sowie einen elektro-akustischen Wandler als Mikrofon zur Aufnahme von Umgebungsschall enthalten. Da diese beiden Mikrofone der Ohr-Einheiten in unmittelbarer Nähe der Ohren des Nutzers angeordnet sind, können sie ein binaurales Signal aufnehmen, das bei Wiedergabe über Kopfhörer oder Ohrhörer einen natürlichen bzw. authentischen Klangeindruck vermittelt. Der Ohrhörer enthält weiterhin mindestens ein weiteres Mikrofon zur Erfassung von Sprache des Nutzers, und als Schnittstelle eine Anschlusseinheit, die geeignet ist, den Ohrhörer mit dem Multimediagerät zu verbinden. Dabei kann der Ohrhörer wahlweise Audiosignale der beiden Mikrofone zur binauralen Aufnahme von Umgebungsschall oder Audiosignale des weiteren Mikrofons, oder eine Mischung aus beidem, über die Anschlusseinheit ausgeben. Dabei weist der erfindungsgemäße Ohrhörer den besonderen Vorteil einer leichten Handhabbarkeit auf. Zum Beispiel weist der Ohrhörer mindestens zwei verschiedene Funktionsmodi auf, zwischen denen sowohl automatisch als auch manuell gewechselt werden kann. Zur manuellen Umschaltung zwischen den Modi ist in einer Ausführungsform ein Bedienelement vorgesehen, so dass das Multimediagerät selbst dazu nicht notwendig ist und ggf. in einer Tasche o.ä. verstaut bleiben kann. Damit ist der erfindungsgemäße Ohrhörer nicht nur einfach zu benutzen, weil binaurale Audioaufnahmen ohne spezielles Fachwissen gemacht werden können, sondern er erleichtert auch die Bedienung des Multimediagerätes, insbesondere das Umschalten vom oder in den Telefonbetrieb. Die manuelle Umschaltung zwischen den Modi kann am Ohrhörer oder auch über das Multimediagerät erfolgen, z.B. durch ein Softwareprogramm.

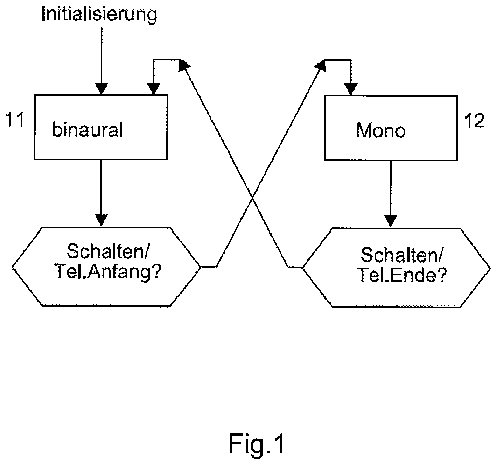

Fig. 1 zeigt ein Flussdiagram dieser verschiedenen Funktionsmodi des erfindungsgemäßen Ohrhörers. In einer Ausführungsform ist der Ohrhörer anfangs in einem Binauralmodus 11, in dem er über seine Schnittstelle die binauralen Signale der in den Ohr-Einheiten befindlichen Mikrofone zur Aufnahme von Umgebungsschall ausgeben kann. Der Nutzer kann über eine Schaltfunktion den Funktionsmodus ändern, so dass das Signal des Mikrofons zur Erfassung von Sprache ausgegeben wird. In diesem Beispiel handelt es sich dabei um ein Mono-Mikrofon, so dass der zweite Funktionsmodus 12 ein Mono-Modus ist. In einer Ausführungsform kann das Mikrofon zur Erfassung von Sprache jedoch auch ein anderes sein, z.B. ein Stereomikrofon, so dass der zweite Modus 12 ein Stereomodus ist. Das Mikrofon zur Erfassung von Sprache ist beim Tragen so nah am Mund des Nutzers angebracht, dass es beim Telefonieren eine bessere Sprachqualität bietet als die in den Ohr-Einheiten befindlichen Mikrofone. Z.B. kann es in einer Mikrofoneinheit untergebracht sein.

Durch nochmalige Betätigung der Schaltfunktion wird wieder das binaurale Signal ausgegeben. Dafür können, in einer Ausführungsform, ein oder mehrere Schalter als Bedienelement am Ohrhörer vorgesehen sein. Der Binauralmodus 11 erlaubt die realitätsnahe Aufnahme einer Audioszene in der Umgebung und ist insbesondere sinnvoll und vorteilhaft, wenn das angeschlossene Multimediagerät eine Audioaufnahmefunktion enthält. Diese kann auch mit einer Videoaufnahmefunktion gekoppelt sein. Der zweite Modus 12 bietet eine bessere Sprachverständlichkeit, insbesondere in einer lauten Umgebung, und ist hauptsächlich für Telefonie gedacht. Daher schaltet der Ohrhörer unabhängig vom aktuellen Modus automatisch in den zweiten Modus 12, sobald das angeschlossene Multimediagerät ein Telefonat beginnt oder annimmt. Dieses Umschalten des angeschlossenen Multimediageräts in den Telefonbetrieb kann nicht nur direkt am Multimediagerät, sondern z.B. über einen am Ohrhörer befindlichen Schalter erfolgen. Dieser kann direkt an einer Ohr-Einheit oder auch an einem anderen Teil des Ohrhörers angebracht sein, z.B. einem Bedienteil. Dabei wird gleichzeitig der Ohrhörer in den zweiten Modus 12 umgeschaltet, wie in Fig. 1 als "Tel.Anfang" angedeutet. In einer Ausführungsform der Erfindung wird nach Beendigung des Telefonats automatisch wieder in den Binauralmodus 11 zurückgeschaltet, wie in Fig.1 durch "Tel.Ende" angedeutet. In einer anderen Ausführungsform bleibt der zuletzt benutzte Modus bestehen und es wird manuell oder erst beim Beginn einer Aufnahme automatisch in den Binauralmodus 11 geschaltet.

Unabhängig davon gibt der Ohrhörer in einem Standard-Wiedergabemodus über die Schallgeber in den Ohr-Einheiten Audiosignale wieder, die über die Anschlusseinheit vom Multimediagerät empfangen werden. Dabei kann es sich um allgemeine Audiosignale wie Musik handeln oder um ein Telefongespräch, außerdem um den weiter unten beschriebenen Transparentmodus.

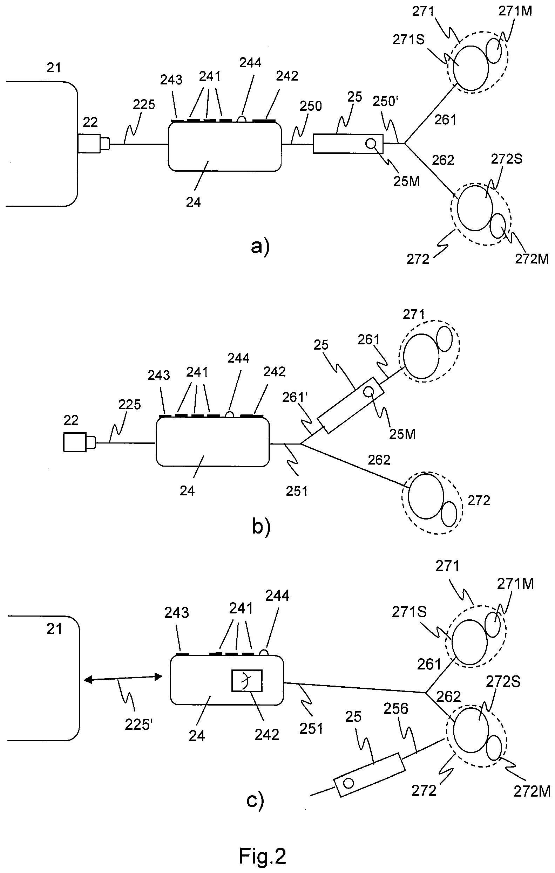

Fig. 2 zeigt skizzierte Ansichten mehrerer verschiedener Ausführungsformen von erfindungsgemäßen Ohrhörern. Grundsätzlich enthält der Ohrhörer zwei Ohr-Einheiten 271, 272, die jeweils einen Schallgeber 271S, 272S und ein Mikrofon 271M, 272M zur Aufnahme von Umgebungsschall enthalten. Diese Mikrofone 271M, 272M sind hier über Kabel 250, 251, 261, 262 mit einer Bedieneinheit 24 verbunden. Diese Kabel 250, 251, 261, 262 können wegen ihrer Form auch als Y-Kabel bezeichnet werden. Außerdem enthält der Ohrhörer hier eine separate Mikrofoneinheit 25 mit einem weiteren Mikrofon 25M. In den in Fig. 2a) und b) gezeigten Ausführungsformen befindet sich die Mikrofoneinheit 25 in einem Teil des Y-Kabels zwischen einer Ohr-Einheit 271, 272 und der Bedieneinheit 24. In einer anderen Ausführungsform ist die Mikrofoneinheit 25 an einer Ohr-Einheit befestigt, z.B. über ein Kabel oder einen Mikrofonarm (Boomarm) 256, wie in Fig. 2c).

In Fig. 2a) ist die Mikrofoneinheit 25 in einem gemeinsamen Teil 250, 250' des Y-Kabels zwischen der Bedieneinheit 24 und beiden Ohr-Einheiten 271, 272 angeordnet. In Fig. 2b) dagegen ist die Mikrofoneinheit 25 in einem Teil 261, 261' des Y-Kabels angeordnet, das nur zu einer der Ohr-Einheiten 271, 272 führt. Eine elektrische Verbindung braucht die Mikrofoneinheit 25 in einigen Ausführungsformen nur zu der Bedieneinheit 24. Außerdem unterscheiden sich die dargestellten Ausführungsformen dadurch, dass die Anschlusseinheit, mit der die Bedieneinheit 24 an das Multimediagerät 21 angeschlossen wird, entweder ein Kabel 225 mit einem Stecker 22 oder eine Drahtlosverbindung 225' umfasst, wie in Fig. 2c). Der Stecker kann ein konfigurierbarer Standardstecker sein, wie z.B. ein Apple "Lightning"-Stecker oder ein Stecker nach dem USB Standard, etwa ein USB-C Stecker oder ein Micro-USB Stecker. Für eine Drahtlosverbindung 225' enthält der Ohrhörer einen Sender und einen Empfänger, z.B. in der Bedieneinheit 24 oder in einem separaten Element, die nach einem (standardisierten) Protokoll mit dem Multimediagerät drahtlos kommunizieren können.

In Fig. 2 ist auch die optionale Bedieneinheit 24 dargestellt. Diese enthält in diesem Beispiel drei erste Schalter 241 mindestens zur Steuerung der Audiowiedergabefunktion des Multimediageräts 21 und zum Umschalten des Multimediageräts in den Telefonbetrieb. Außerdem enthält die Bedieneinheit einen zweiten Schalter 242, mit dem zwischen dem ersten Modus 11 und dem zweiten Modus 12 umgeschaltet werden kann. Mit anderen Worten, mit der Schaltfunktion 242 des zweiten Schalters kann manuell bestimmt werden. ob die Anschlusseinheit mit den beiden Mikrofonen 271M, 272M zur binauralen Aufnahme von Umgebungsschall oder mit dem weiteren Mikrofon in der Mikrofoneinheit 25 verbunden ist, um deren Signale an das Multimediagerät 21 weiterzugeben. Diese Umschaltung ist vorzugsweise jederzeit möglich, auch während des Telefonbetriebs. In Fig. 2c) ist die zweite Schaltfunktion 242 als eine vom Multimediagerät 21 aus steuerbare elektronische Einheit ohne mechanischen Schalter dargestellt. Jedoch kann die vom Multimediagerät 21 aus steuerbare elektronische zweite Schaltfunktion 242 zusätzlich auch durch einen mechanischen Schalter wie in Fig. 2a), b) dargestellt steuerbar sein. Die verschiedenen Merkmale der in Fig. 2 gezeigten Ausführungsformen bezüglich der verschiedenen Anschlusseinheiten, Schaltfunktionen und Anordnungen der Mikrofoneinheit 25 können auch anders miteinander kombiniert werden.

Außerdem enthält die Bedieneinheit 24 in dieser Ausführungsform als weitere Schaltfunktion 243 einen weiteren Schalter und als optische Anzeige 244 des gerade ausgewählten Funktionsmodus 11,12 eine Leuchte. Die weitere Schaltfunktion 243 kann ebenso wie die zweite Schaltfunktion 242 als eine vom Multimediagerät 21 aus steuerbare elektronische Einheit mit oder ohne mechanischen Schalter implementiert sein. Die optische Anzeige kann als LED ausgeführt sein oder anders, z.B. als LCD-Display. Z.B. leuchtet in einer Ausführungsform die optische Anzeige nur dann, wenn sich der Ohrhörer im zweiten Modus 12 befindet. Sie kann damit sowohl für den Nutzer als auch für seine Umgebung anzeigen, ob der Nutzer bzw. dessen Gesprächspartner die Umgebung des Nutzers hören kann. Die weitere Schaltfunktion 243 kann einen Transparentmodus (talk-through mode) ein- und ausschalten, in dem das Signal eines Mikrofons 271M, 272M für Umgebungsschall mit dem jeweils in derselben Ohr-Einheit befindlichen Schallgeber 271S, 272S verbunden wird. Damit kann der Nutzer seine Umgebung auch dann hören, wenn die Ohr-Einheiten den Ohrkanal verschließen. Die von dem Mikrofon 271M, 272M für Umgebungsschall aufgenommenen Audiosignale können auch erst in einer Verarbeitungseinheit für den Transparentmodus verarbeitet werden. Die Verarbeitungseinheit kann z.B. als Filter oder als Equalizer agieren. Vorzugsweise ist eine solche Verarbeitungseinheit in einer Ohr-Einheit oder in der Bedieneinheit angebracht. Die Verarbeitung kann ganz oder teilweise analog erfolgen, was die Latenzzeit reduzieren und effektiver sein kann. Einige Parameter der Verarbeitung können vom Nutzer verändert werden. Im Prinzip sind damit mindestens drei Signalpfade vorgesehen: ein erster Signalpfad umfasst die Mikrofone 271M, 272M zur Aufnahme von Umgebungsschall und die Anschlusseinheit. Ein zweiter Signalpfad umfasst das Mikrofon in der Mikrofoneinheit 25 und die Anschlusseinheit. Ein dritter Signalpfad umfasst die Mikrofone 271M, 272M zur Aufnahme von Umgebungsschall, die Schallgeber 271S, 272S in den Ohr-Einheiten sowie eine dazwischenliegende Verarbeitungseinheit. Mittels der Bedieneinheit 24 kann zwischen diesen Signalpfaden umgeschaltet werden. Auch der erste und/oder zweite Signalpfad kann optional eine Verarbeitungseinheit enthalten. Die Verarbeitungseinheiten können vorzugsweise Audiosignale im gesamten hörbaren Frequenzspektrum verarbeiten.

In einer Ausführungsform kann die weitere Schaltfunktion 243 auch zwischen mehreren Transparentmodi umschalten. Diese Transparentmodi unterscheiden sich darin, ob und mit welcher Verstärkung oder Dämpfung das Signal des Mikrofons 271M, 272M für Umgebungsschall auf den jeweils in derselben Ohr-Einheit befindlichen Schallgeber 271S, 272S geschaltet wird.

Zum Beispiel werden in einem Nicht-Transparentmodus die Signale der Mikrofone für Umgebungsschall nicht auf die Schallgeber geschaltet ("Aus"), in einem ersten Transparentmodus werden die Signale der Mikrofone für Umgebungsschall gedämpft auf die Schallgeber geschaltet, und in einem zweiten Transparentmodus werden die Signale der Mikrofone für Umgebungsschall im Wesentlichen ungedämpft auf die Schallgeber geschaltet. Damit hört der Nutzer im zweiten Transparentmodus seine Umgebung im Prinzip "natürlich", d.h. so, als ob er keinen Ohrhörer tragen würde. Ein oder mehr weitere Transparentmodi sind möglich, z.B. mit mehr oder weniger Dämpfung als im ersten Transparentmodus, oder mit einer Verstärkung. Dabei kann bei einer Erhöhung der Audiowiedergabelautstärke oberhalb eines Schwellwertes auch die Wiedergabelautstärke mindestens eines Transparentmodus erhöht werden.

Die weitere Schaltfunktion 243 kann unterschiedlich ausgeführt sein, z.B. als Wipptaster mit einer Ruhestellung und zwei Taststellungen (z.B. "aufwärts" und "abwärts", in Stufen oder stufenlos) mit entsprechender Software oder als mehrstufiger Schalter mit mehreren Raststellungen.

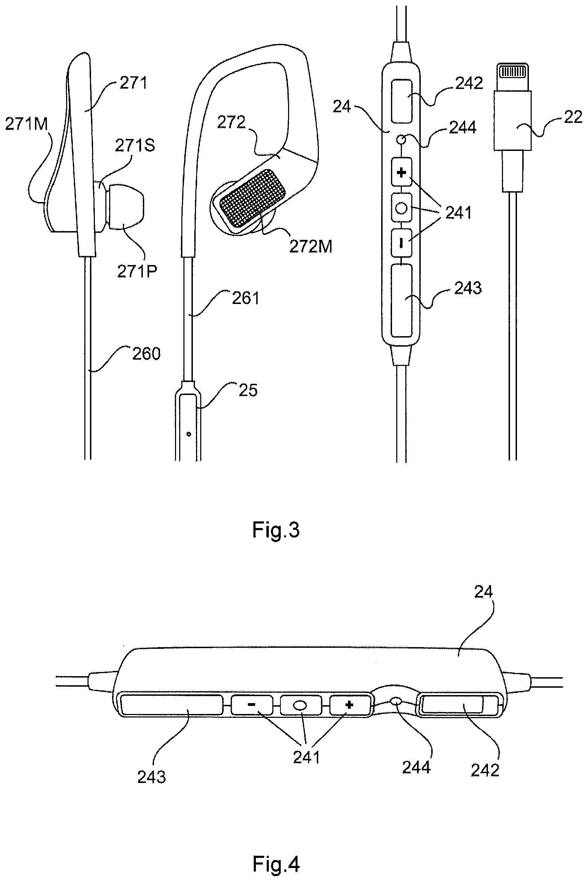

Fig. 3 zeigt Ansichten exemplarischer Komponenten des erfindungsgemäßen Ohrhörers in einer Ausführungsform. Dabei enthält jede der Ohr-Einheiten 271, 272 ein Ohr-Passstück 271P, das am oder im Ohr befestigt und durch dessen Öffnung der Schall des Schallgebers 271S in den Ohrkanal gegeben werden kann. Auf der gegenüberliegenden Seite befindet sich ein Mikrofon 271M, 272M, das den jeweiligen Umgebungsschall aufnehmen kann. Jede Ohr-Einheit 271, 272 ist mit einem Kabel 260, 261 verbunden. Dabei ist in diesem Beispiel die Mikrofoneinheit 25 in eines dieser Kabel integriert, entsprechend Fig. 2b). Dabei kann die Mikrofoneinheit 25 in das Kabel zur linken oder zur rechten Ohr-Einheit integriert sein. In einer Ausführungsform können auch zwei Mikrofoneinheiten 25 verwendet werden, die in den beiden Zuleitungskabeln für die Ohr-Einheiten 271, 272 integriert sein können.

Fig. 3 zeigt auch eine Ansicht eines exemplarischen Bedienelements 24 mit den ersten Schaltern 241, dem Schalter für die zweite Schaltfunktion 242, der Anzeige 244 und dem weiteren Schalter 243 für die weitere Schaltfunktion. In diesem Beispiel handelt es sich bei dem weiteren Schalter 243 z.B. um einen Wippschalter oder Wipptaster mit einer Ruhestellung und zwei Taststellungen. Rechts in Fig.3 ist die Anschlusseinheit mit einem Stecker 22 dargestellt, der in diesem Beispiel ein Apple-"Lightning" Stecker ist.

In der in Fig. 4 als eine Ausführungsform gezeigten Ansicht einer exemplarischen Bedieneinheit ist die zweite Schaltfunktion 242 als Taster oder als Schiebe-Tastschalter ausgeführt, d.h. als ein durch seitliches Schieben zu betätigender Taster. Jede Betätigung des Tasters 242 schaltet zwischen dem ersten Modus 11 und dem zweiten Modus 12 hin und her. Die Ausführung als Schiebe-Taster erschwert eine versehentliche Betätigung. Die ersten Schalter 241 enthalten in diesem Beispiel je einen mit "+" und "-" bezeichneten Schalter, z.B. zur Regelung der Lautstärke, zur Menüführung oder zur Auswahl von wiederzugebenden Audiodateien auf dem Multimediagerät, und einen mit "o" bezeichneten Schalter, der z.B. zum Ein- und Ausschalten des Telefonbetriebs und/oder zur Bestätigung der Auswahl von Menüpunkten oder von wiederzugebenden Audiodateien auf dem Multimediagerät benutzt werden kann.

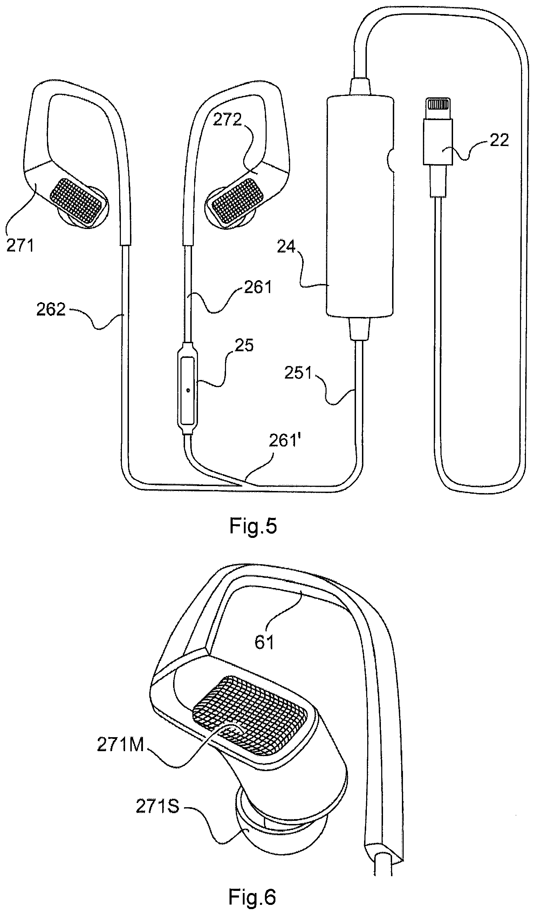

Fig. 5 zeigt eine exemplarische Gesamtansicht einer Ausführungsform des Ohrhörers mit den einzelnen oben beschriebenen Komponenten. Dabei kann das Bedienelement 24 auch andersherum angeordnet sein, so dass sich die Leuchtanzeige 244 und der zweite Schalter 241 an dem der Ohr-Einheit zugewandten Ende des Bedienelements befinden.

Fig. 6 zeigt eine Ansicht einer exemplarischen Ohr-Einheit. Die Ohr-Einheiten 271, 272 in dieser Ausführungsform enthalten Befestigungsbügel 61, die über dem Ohr getragen geeignet sind, die jeweilige Ohr-Einheit am Ohr zu befestigen. Das Mikrofon 271M zur Aufnahme von Umgebungsschall ist unter einem Drahtgeflecht angebracht, das das Mikrofon vor Wind und Beschädigung oder versehentlicher Berührung schützt. In einer Ausführungsform hat das Mikrofon eine breite Richtcharakteristik, bis zu 180°, was für Umgebungsaufnahmen besonders vorteilhaft ist.

Zusätzlich zu den in Fig. 1 gezeigten beiden Modi 11, 12 kann die Anschlusseinheit in einer Ausführungsform auch mit allen drei Mikrofonen 271M, 272M, 25M verbunden sein. In diesem Fall überlagern sich das binaurale Signal der beiden Mikrofone 271M, 272M der Ohr-Einheiten (Binaural-Mikrofone) und das Signal des Mikrofons 25M aus der Mikrofoneinheit 25. Vorzugsweise wird aber bei Beginn eines Telefonats zunächst immer automatisch in den zweiten Modus 12 geschaltet. Außerdem kann es einen Modus geben, in dem Audiosignale des Mikrofons 25M zur Erfassung von Sprache so ausgegeben werden, dass sie für den Telefonbetrieb des Multimediageräts benutzt werden können, während gleichzeitig Audiosignale der Mikrofone 271M, 272M zur Erfassung von Umgebungsschall separat ausgegeben werden, so dass sie für einen Audioaufnahmemodus des Multimediageräts benutzt werden können. In diesem Modus stört die Stimme des (telefonierenden) Nutzers die Aufnahme nicht oder nur wenig die gleichzeitig laufende Audioaufnahme, weil sie nur schwach über die Mikrofone 271M, 272M erfasst wird. Trotzdem wird die Stimme vom Mikrofon 25M gut für den Telefonbetrieb erfasst. Das Mikrofon 25M erfasst aber nur wenig Umgebungsschall. In einer Ausführungsform kann z.B. die vom Mikrofon 25M aufgenommene Stimme des Nutzers teilweise oder überwiegend aus dem von den Mikrofonen 271M, 272M aufgenommenen Umgebungsschall subtrahiert werden, oder umgekehrt. Alternativ können die Audiosignale der Mikrofone 271M, 272M zur Erfassung von Umgebungsschall als Eingangssignale einer automatischen Lärmkompensation (ANC) benutzt werden. Dadurch können Umgebungsgeräusche sowohl aus dem Sprachsignal des Mikrofons 25M für den Telefonbetrieb als auch aus dem über die Schallgeber wiedergegebenen Signal reduziert bzw. eliminiert werden. In einer Ausführungsform wird bei Annahme eines Telefonats bzw. beim Umschalten in den Telefonbetrieb automatisch das Mikrofon 25M sowie die aktive Lärmkompensation eingeschaltet.

Das Multimediagerät kann so konfiguriert sein, dass seine internen Mikrofone und/oder Lautsprecher bei Anschluss des Ohrhörers abgeschaltet werden. Diese Abschaltung kann durch Steuersignale gesteuert werden, die der Ohrhörer über seine Anschlusseinheit ausgibt. Gleiches gilt für eine mögliche Aktivierung der internen Mikrofone und/oder Lautsprecher des Multimediagerätes vom Ohrhörer aus.

Der erfindungsgemäße Ohrhörer kann auch einen oder mehrere Analog-Digitalwandler (ADC) für ausgehende Signale und/oder einen oder mehrere Digital-Analogwandler (DAC) für ankommende Signale beinhalten, z.B. in der Anschlusseinheit oder der Verarbeitungseinheit. Ebenfalls kann optional ein Verzögerungselement vorhanden sein, das z.B. einen Offset zur Synchronisation der ausgegebenen Audiodaten mit einem Video erzeugt.

Optional können alle in der obigen Beschreibung durch Kabel realisierten Verbindungen auch drahtlos ausgeführt werden. In diesem Fall kann der Ohrhörer z.B. aus zwei Teilen bestehen, nämlich zwei separaten drahtlosen Ohr-Einheiten 271, 272. Das Mikrofon 25M, die Bedieneinheit 24 und die Anschlusseinheit können in eine der Ohreinheiten integriert sein, wobei aber das Mikrofon 25M etwas abgesetzt angebracht ist derart, dass es die Stimme des Nutzers gut erfassen kann. In einer Ausführungsform besteht der Ohrhörer aus drei Teilen, z.B. mit einer zusätzlichen drahtlosen Mikrofoneinheit 25, die mindestens das Mikrofon 25M zur Erfassung von Sprache enthält und näher am Mund des Nutzers getragen werden kann als die Ohr-Einheiten. Die drahtlose Mikrofoneinheit 25 kann aber auch ein oder mehr Bedienelemente, Anzeigen oder die Anschlusseinheit enthalten.

In einer Ausführungsform der Erfindung enthält ein Verfahren zum Betrieb eines Mikrofons bzw. Headsets die Schritte: Aufnehmen von Umgebungsschall über zwei erste Mikrofone, die an Ohr-Einheiten 271, 272 eines Ohrhörers befestigt sind, Ausgeben der von den ersten Mikrofonen aufgenommenen binauralen Signale über eine Schnittstelle an ein angeschlossenes Multimediagerät, und Umschalten des angeschlossenen Multimediageräts in eine Telefonbetriebsart mittels einer Schaltfunktion am Ohrhörer, wobei die Schaltfunktion außerdem bewirkt, dass statt der von den ersten Mikrofonen aufgenommenen binauralen Signale Ausgangssignale eines zweiten Mikrofons 25M über die Schnittstelle an das angeschlossene Multimediagerät ausgegeben werden. Das zweite Mikrofon ist ebenfalls Teil des Ohrhörers, aber näher am Mund des Nutzers angebracht als die ersten Mikrofone.

Mittels einer weiteren Schaltfunktion am Ohrhörer kann der Nutzer auch während der Telefonbetriebsart so umschalten, dass die Signale der ersten Mikrofone über die Schnittstelle ausgegeben oder für aktive Lärmkompensation benutzt werden. Das angeschlossene Multimediagerät 21 kann das Signal z.B. aufnehmen, verarbeiten und/oder speichern.

Mit dem erfindungsgemäßen Ohrhörer sind einer oder mehrere der folgenden beispielhaft genannten Betriebsszenarien möglich. In einer Betriebsart werden Audiosignale aus dem Multimediagerät über die Schallgeber wiedergegeben, z.B. Musik, und die Mikrofone werden nicht benutzt, d.h. der Transparentmodus ist ausgeschaltet. Bei Betätigung der dritten Schaltfunktion 243 wird ein erster Transparentmodus eingeschaltet, bei dem der Nutzer zusätzlich zu den Audiosignalen aus dem Multimediagerät auch die Umgebung hört, allerdings gedämpft. Bei nochmaliger Betätigung der dritten Schaltfunktion 243 wird ein zweiter Transparentmodus eingeschaltet, bei dem der Nutzer nicht nur die Audiosignale aus dem Muitimediagerät, sondern auch die eigene Umgebung in Originallautstärke (also transparent) hört. Die Transparentmodi können auch ohne Audiosignale aus dem Multimediagerät betrieben werden, so dass z.B. im ersten Transparentmodus in einer sehr lauten Umgebung der Nutzer diese nur gedämpft hört. Dieser Modus kann daher z.B. in einem sehr lauten Konzert als Gehörschutz dienen, insbesondere wenn die Ohr-Einheit den Ohrkanal verschließt. Im zweiten Transparentmodus kann der Nutzer, wenn er die Musikwiedergabe unterbricht, um mit einer anderen Person zu sprechen, die Ohr-Einheiten in den Ohren behalten und trotzdem die Person in Originallautstärke hören. Optional ist es in einer Ausführungsform auch möglich, die Lautstärke der Audiowiedergabe und/oder des Transparentmodus getrennt zu regeln. Z.B. können die beiden Lautstärkewerte über das Multimediagerät oder direkt über die Bedieneinheit 24 getrennt programmiert oder eingestellt werden. Damit kann der Nutzer die Lautstärke der Audiowiedergabe reduzieren, ohne dass sich die Lautstärkereduktion der Wiedergabe auf den Transparentmodus auswirkt, so dass die Musik während des Gesprächs mit geringer Lautstärke weiterlaufen kann. Außerdem ist es mindestens im zweiten Transparentmodus möglich, dass der Nutzer als Verkehrsteilnehmer telefonieren und trotzdem gleichzeitig Verkehrsgeräusche, Warnsignale etc. aus seiner Umgebung hören kann. Dies erhöht die Verkehrssicherheit. In einer Ausführungsform ist es auch möglich, die Lautstärke der Audiowiedergabe und des Transparentmodus gemeinsam zu regeln. Z.B. kann bei Erhöhung der Lautstärke der Audiowiedergabe automatisch auch die Lautstärke des Transparentmodus erhöht werden. In einer Ausführungsform ist es möglich, einen oder mehrere Parameter des Ohrhörers, z.B. die Dämpfung des ersten Transparentmodus, die Wiedergabelautstärke(n) usw., vom angeschlossenen Multimediagerät aus zu programmieren, z.B. über eine Applikationssoftware (App). Dabei können Parameter der Binaural-Mikrofone bzw. des Binauralmodus und Parameter der Wiedergabe, insbesondere Parameter des Transparentmodus, unabhängig voneinander eingestellt werden. So kann z.B. der Nutzer, der als Verkehrsteilnehmer telefoniert, die Lautstärke einstellen, mit der Verkehrsgeräusche zu ihm durchdringen. Der Transparentmodus ist z.B. auch für DJs vorteilhaft, die gleichzeitig die Musik ihrer Umgebung und andere Musik über Kopfhörer hören wollen und daher traditionell nur einen Hörer eines Kopfhörers benutzen. Mit dem Transparentmodus ist es möglich, sowohl die Umgebung als auch die Musik mit beiden Ohren zu hören. Dies kann vorteilhaft auch für "augmented reality"-Szenarien benutzt werden.

In einer anderen Betriebsart macht der Nutzer mittels des Multimediagerätes eine Video- oder Audioaufnahme. In diesem Fall werden entsprechend dem ersten Modus 11 die Audiosignale der Binaural-Mikrofone an das Multimediagerät übertragen, z.B. um das aufgenommene Video mit authentischem (binauralem) Umgebungsschall zu unterlegen. Gleichzeitig kann der Nutzer seine Umgebung hören, wenn ein Transparentmodus eingeschaltet ist. Falls gleichzeitig eine Telefonverbindung besteht (siehe unten), kann der binaurale Umgebungsschall in einem oder mehreren Modi auch an den anderen Teilnehmer gesendet werden. Auch in dieser Betriebsart ist es vorteilhafterweise möglich, für die gleichzeitige Wiedergabe über die Schallgeber den Transparentmodus ein-/auszuschalten bzw. zwischen den verschiedenen Transparentmodi umzuschalten. Dazu kann die dritte Schaltfunktion 243 benutzt werden, wie oben beschrieben. Außerdem kann der Nutzer mit der zweiten Schaltfunktion 242 das Mikrofon 25M zur Erfassung der Stimme zuschalten, z.B. um das Video während der Aufnahme zu kommentieren. Dabei können optional die Binaural-Mikrofone stufenweise oder stufenlos gedämpft oder abgeschaltet werden.

Unabhängig vom gewählten Transparentmodus wird beim Umschalten des Multimediagerätes in den Telefonbetrieb das in der Mikrofoneinheit 25 befindliche Mikrofon und damit der zweite Modus 12 eingeschaltet, d.h. die Signale dieses Mikrofons werden an das Multimediagerät weitergegeben. In einer Ausführungsform werden dabei die Signale der Binaural-Mikrofone zunächst nicht an das Multimediagerät weitergegeben. Der Nutzer kann während des Telefonats aber mit der zweiten Schaltfunktion 242 in den ersten Modus 11 schalten, so dass der Gesprächspartner auch die über die Binaural-Mikrofone aufgenommene Umgebung hören kann. Das gilt auch, wenn der Nutzer während des Telefonats Videoaufnahmen macht und an den Gesprächspartner sendet. Vorzugsweise werden die Mikrofonsignale in diesem Modus mindestens während des Telefonats so gemischt, dass der Gesprächspartner auch noch die von dem in der Mikrofoneinheit 25 befindlichen Mikrofon 25M aufgenommene Stimme des Nutzers hört. Diese kann gegenüber dem binauralen Umgebungsschall gedämpft oder hervorgehoben sein. Der Nutzer kann das Mischungsverhältnis einstellen, z.B. über eine App am Multimediagerät. Der Nutzer selbst hört z.B. die Stimme seines Gesprächspartners gemischt mit dem eigenen Umgebungsschall. Alternativ kann in einem anderen Modus der Umgebungsschall auch durch aktive Lärmkompensation herausgefiltert werden, wobei der Umgebungsschall von den Binaural-Mikrofonen 271M, 272M aufgenommen wird. Dieser Modus kann automatisch beim Umschalten des Multimediagerätes in den Telefonbetrieb gewählt werden.

In einem anderen Ausführungsbeispiel werden die Mikrofonsignale beim Umschalten des Multimediagerätes in den Telefonbetrieb in einen Halbtransparentmodus geschaltet, so dass der Nutzer nicht nur seinen Gesprächspartner, sondern gedämpft auch seine eigene Umgebung über die Schallgeber 271S, 272S hört. Der Gesprächspartner kann eine Mischung beider Anteile in gleicher oder anderer Gewichtung hören, z.B. überwiegend die Stimme des Nutzers. Auch hier kann der Nutzer das Mischungsverhältnis einstellen, z.B. über eine App.

Die Erfindung ermöglicht es dem Nutzer, das Audiosignal für eine Aufnahme sofort zu hören bzw. dessen Audioqualität sofort zu beurteilen. Die Positionierung der Binaural-Mikrofone direkt am Ohrkanal ist vorteilhaft, da die Ohrmuschel den Schall direkt dorthin lenkt.

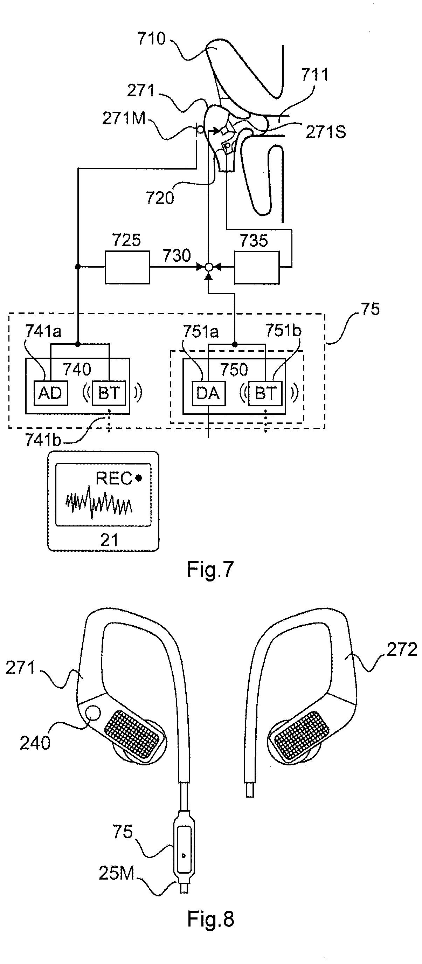

Wie schon erwähnt, ist optional auch aktive Lärmkompensation (active noise cancellation, ANC) möglich. Fig. 7 zeigt in einem Ausführungsbeispiel eine schematische Darstellung einer Seite eines Ohrhörers mit ANC. Dabei können die Signale des Mikrofons 271M zur Aufnahme von Umgebungsschall benutzt werden. Durch phaseninverse Wiedergabe über den Schallgeber 271S wird der störende Umgebungsschall im Ohrkanal 711 kompensiert. Das Mikrofon 271M zur Aufnahme von Umgebungsschall ermöglicht dabei eine offene Steuerung (feed-forward ANC). Eine Verarbeitungseinheit 725 erzeugt das Kompensationssignal. In einer verbesserten Ausführung enthält die Ohr-Einheit 271 ein weiteres Mikrofon 720 auf der dem Ohrkanal 711 zugewandten Seite und eine Verarbeitungseinheit 735. Dies ermöglicht eine geschlossene Regelschleife (feed-back ANC). Das Innenmikrofon 720 erfasst dabei die Überlagerung von Schall, der von dem Schallgeber 271S erzeugt wurde, mit Störschall, der in den Ohrkanal 711 eingedrungen ist. Die Verarbeitungseinheit 735 ist dann als Regler ausgelegt, dessen Ziel es ist, die erfasste Überlagerung zu Null zu machen. Der Regler stellt ein Übertragungsfilter dar, dessen Übertragungsfunktion auf dieses Ziel ausgelegt ist.

Außerdem kann mit Hilfe des Innenmikrofons 720 der Okklusionseffekt reduziert werden. Die Verarbeitungseinheit 735 wirkt dabei als Okklusionsreduzierungseinheit und/oder ANC-Einheit. Der Okklusionseffekt oder Verschlusseffekt entsteht durch den Verschluss des Ohrkanals mit einem Ohrstopfen oder einem Ohrhörer. Wenn eine Person spricht, erzeugen die Stimmbänder Vibrationen, welche sich im Schädel ausbreiten und auch den Ohrkanal in Schwingungen versetzen, so dass der Ohrkanal Schall an die Umgebung abstrahlt. Ohne einen Ohrstopfen verlässt dieser Schall den Ohrkanal und das im Ohr entstehende Geräusch wird als natürliches Klangbild empfunden. Wenn der Ohrkanal aber verschlossen ist, werden die vom Ohrkanal abgestrahlten Schallwellen an dem Ohrstopfen bzw. Ohrhörer reflektiert und in den Ohrkanal zurückgeworfen und somit dem Trommelfell zugeleitet, so dass der Nutzer den zurückgeworfenen Schall hört. Dieser Effekt wird als Okklusionseffekt bezeichnet. Er verfälscht das entstehende Klangbild und wird daher als unangenehm empfunden. Die Verarbeitungseinheit 735 ist so ausgelegt, dass der Schall, den das Innenmikrofon 720 erfasst, reduziert wird. Das betrifft auch den Fall, dass der vom Innenmikrofon 720 erfasste Schall eine Überlagerung von dem Schall darstellt, der von dem Schallgeber 271S erzeugt wurde, mit dem Schall, der vom Ohrkanal eines sprechenden Nutzers abgestrahlt wurde. Wenn also diese Überlagerung durch die Verarbeitungseinheit 735 zu Null geregelt wird, dann wird das Geräusch, das der Ohrkanal 711 abstrahlt, an der Stelle des Mikrofons 720 durch den Schall, der vom Schallgeber 271S abgestrahlt wird, kompensiert. Somit tritt an der Stelle, an welcher der vom Ohrkanal kommende Schall reflektiert werden könnte, kein Schall auf. Somit wird kein Schall zurückgeworfen und der Okklusionseffekt tritt nicht auf.

Bei der aktiven Lärmkompensation wird Umgebungsschall, der trotz des abgedichteten Ohrkanals an das Trommelfell gelangen kann, durch Gegendruck im Ohrkanal kompensiert. Dazu kann eine Summationseinheit 730 entsprechend verarbeitete Signale der Verarbeitungseinheit 725 vom Außenmikrofon 271M, der Verarbeitungseinheit 735 vom Innenmikrofon 720 und/oder eines wiederzugebenden Signals von einer externen Audioquelle überlagern und dadurch im Ohrkanal nur das wiederzugebende Signal erzeugen. Fig. 7 stellt exemplarisch auch eine Ausgabeeinheit 740 dar, die einen Analog-Digitalwandler 741a und einen optionalen Drahtlossender 741b enthält. Optional kann der Ohrhörer auch eine Eingabeeinheit 750 mit einem Digital-Analogwandler 751a und einem optionalen Drahtlosempfänger 751b enthalten. Der Sender 741b und der Empfänger 751b dienen der drahtlosen Kommunikation mit dem Multimediagerät 21. Die andere Seite des Ohrhörers ist entsprechend aufgebaut.

Fig. 8 zeigt eine zweiteilige Ausführungsform des Ohrhörers mit zwei Ohr-Einheiten 271, 272, die jeweils mindestens einen Schallgeber und ein Mikrofon zur Aufnahme von Umgebungsschall beinhalten, und einer Anschlusseinheit 75 für drahtlosen Anschluss an ein Multimediagerät. In die Anschlusseinheit 75 integriert ist das Mikrofon 25M zur Erfassung der Stimme eines Nutzers. Die Ohr-Einheiten enthalten in diesem Beispiel außerdem ein oder mehr Bedienelemente 240 z.B. für die oben beschriebenen Schaltfunktionen 241, 242.

Die Erfindung kann für Ohrhörer, Headsets und ähnliche Vorrichtungen verwendet werden, die sowohl zur Audiowiedergabe als auch zur binauralen Audioaufnahme ebenso wie zum Telefonieren geeignet sind.

## Patentansprüche

1. Ohrhörer zum Anschluss an ein Multimediagerät (21), das für einen Telefonbetrieb und einen Audioaufnahme-/wiedergabebetrieb geeignet ist, wobei der Ohrhörer enthält:
- zwei Ohr-Einheiten (271, 272), wobei jede Ohr-Einheit mindestens einen Schallgeber (271S, 272S) und ein Mikrofon (271M, 272M) zur Aufnahme von Umgebungsschall an jeweils einem Ohr eines Nutzers enthält;
- mindestens ein weiteres Mikrofon (25M) zur Erfassung von Sprache des Nutzers;
- eine Anschlusseinheit (75, 22, 225, 225'), die geeignet ist, den Ohrhörer mit dem Multimediagerät (21) zu verbinden;
wobei die Anschlusseinheit wahlweise und vom Nutzer einstellbar entweder Audiosignale der beiden Mikrofone (271M, 272M) zur binauralen Aufnahme von Umgebungsschall an das Multimediagerät ausgeben kann oder Audiosignale des weiteren Mikrofons (25M) zur Erfassung von Sprache an das Multimediagerät ausgeben kann, und
wobei wenn das Multimediagerät in den Telefonbetrieb schaltet, der Ohrhörer automatisch in einen Modus (12) schaltet, in dem die Anschlusseinheit Audiosignale nur des weiteren Mikrofons (25M) ausgibt.

2. Ohrhörer nach Anspruch 1, wobei der Ohrhörer in einem ANC-Modus für aktive Lärmkompensation (ANC) betrieben werden kann und wobei die Mikrofone (271M, 272M) zur Aufnahme von Umgebungsschall in dem ANC-Modus benutzt werden, und wobei der Ohrhörer automatisch in einen ANC-Modus schaltet, wenn das Multimediagerät in den Telefonbetrieb schaltet.

3. Ohrhörer nach Anspruch 2, wobei die Ohr-Einheiten (271, 272) je ein weiteres Mikrofon (720) auf der dem Ohr zugewandten Seite enthalten, das ebenfalls in dem ANC-Modus benutzt wird.

4. Ohrhörer nach einem der Ansprüche 1 bis 3, wobei die Ohr-Einheiten (271, 272) mit je einem Kabel (261, 262) verbunden sind und das Mikrofon (25M) zur Erfassung von Sprache des Nutzers in einem der Kabel angeordnet ist.

5. Ohrhörer nach einem der Ansprüche 1 bis 4, wobei die Anschlusseinheit ein Kabel (225) und einen Stecker (22) umfasst.

6. Ohrhörer nach einem der Ansprüche 1 bis 4, wobei die Anschlusseinheit einen Sender und einen Empfänger für eine drahtlose Verbindung (225') zum Multimediagerät (21) umfasst.

7. Ohrhörer nach einem der Ansprüche 1 bis 6, wobei in mindestens einer weiteren Betriebsart die Anschlusseinheit (75, 22, 225, 225') Audiosignale von allen drei Mikrofonen (271M, 272M, 25M) ausgeben kann.

8. Ohrhörer nach einem der Ansprüche 1 bis 7, wobei sich das Mikrofon (25M) zur Erfassung von Sprache des Nutzers in einer Mikrofoneinheit (25) befindet, und wobei der Ohrhörer weiterhin eine Bedieneinheit (24) enthält, die über Kabel (250 - 262) mit beiden Ohr-Einheiten und der Mikrofoneinheit (25) verbunden ist, wobei die Bedieneinheit (24) einen oder mehrere erste Schalter (241) mindestens zum Umschalten des Multimediageräts in den Telefonbetrieb enthält sowie eine zweite Schaltfunktion (242), die umschalten kann zwischen dem Modus (12), in dem die Anschlusseinheit Audiosignale nur des Mikrofons (25M) zur Erfassung von Sprache des Nutzers ausgibt, und einem anderen Modus (11), in dem die Anschlusseinheit Audiosignale der beiden Mikrofone (271M, 272M) zur binauralen Aufnahme von Umgebungsschall ausgibt.

9. Ohrhörer nach Anspruch 8, wobei die zweite Schaltfunktion (242) ein durch seitliches Schieben zu betätigender Taster ist.

10. Ohrhörer nach einem der Ansprüche 1 bis 9, wobei der Ohrhörer eine Schaltfunktion (243) enthält, die zwischen mehreren Transparentmodi schalten kann, wobei sich die Transparentmodi darin unterscheiden, ob und mit welcher Verstärkung oder Dämpfung das Audiosignal eines Mikrofons (271M, 272M) zur binauralen Aufnahme von Umgebungsschall auf den jeweils in derselben Ohr-Einheit befindlichen Schallgeber (271S, 272S) geschaltet wird.

11. Ohrhörer nach Anspruch 10, wobei in einem Nicht-Transparentmodus die Audiosignale der Mikrofone (271M, 272M) zur binauralen Aufnahme von Umgebungsschall nicht auf die Schallgeber geschaltet werden, in einem ersten Transparentmodus die Audiosignale der Mikrofone (271M, 272M) zur binauralen Aufnahme von Umgebungsschall gedämpft auf die Schallgeber geschaltet werden und in einem zweiten Transparentmodus die Audiosignale der Mikrofone (271M, 272M) zur binauralen Aufnahme von Umgebungsschall im Wesentlichen ungedämpft auf die Schallgeber geschaltet werden.

12. Ohrhörer nach Anspruch 10 oder 11, wobei bei einer Erhöhung der Audiowiedergabelautstärke oberhalb eines Schwellwertes auch die Wiedergabelautstärke mindestens eines Transparentmodus erhöht wird.

13. Ohrhörer nach einem der Ansprüche 1 bis 12, wobei nach Beendigung eines Telefonats die Anschlusseinheit automatisch Audiosignale der beiden Mikrofone (271M, 272M) zur binauralen Aufnahme von Umgebungsschall ausgibt.

14. Ohrhörer nach einem der Ansprüche 1 bis 13, wobei der Ohrhörer weiterhin eine optische Anzeige (244) enthält, die anzeigt, ob der Ohrhörer in einem Modus (12) ist, in dem die Anschlusseinheit Audiosignale der beiden Mikrofone (271M, 272M) zur binauralen Aufnahme von Umgebungsschall ausgibt oder in einem andern Modus (11), in dem die Anschlusseinheit Audiosignale des Mikrofons (25M) zur Erfassung von Sprache des Nutzers ausgibt.

## Claims

1. Earphones for connection to a multimedia device (21) that is suitable for telephone operation and audio recording/playback operation, wherein the earphones comprise:
- two ear units (271,272), wherein each ear unit comprises at least a sound generator (271S,272S) and a microphone (271M,272M) for recording ambient sound at an ear of a user;
- at least one further microphone (25M) for acquiring speech of the user;
- a connection unit (75, 22, 225, 225') that is suitable for connecting the earphones with the multimedia device (21);
wherein the connection unit may output to the multimedia device, in a selectable and user adjustable manner, either audio signals from the two microphones (271M,272M) for binaurally recording ambient sound or audio signals of the further microphone (25M) for acquiring speech, and
wherein when the multimedia device switches to the telephone mode, the earphones switch automatically to a mode (12) in which the connection unit outputs audio signals of only the further microphone (25M).

2. Earphones according to claim 1, wherein the earphones may be operated in an ANC mode for active noise compensation (ANC) and wherein the microphones (271M,272M) are used for acquiring ambient sound in the ANC mode, and wherein the earphones automatically switch into an ANC mode when the multimedia device switches to the telephone mode.

3. Earphones according to claim 2, wherein the ear units (271,272) each comprise a further microphone (720) located on a side facing the ear and being also used in the ANC mode.

4. Earphones according to one of the claims 1 through 3, wherein the ear units (271,272) are each connected with a cable (261,262) and the microphone (25M) for acquiring speech of the user is located in one of the cables.

5. Earphones according to one of the claims 1 through 4, wherein the connection unit comprises a cable (225) and a plug (22).

6. Earphones according to one of the claims 1 through 4, wherein the connection unit comprises a transmitter and a receiver for a wireless connection (225') to the multimedia device (21).

7. Earphones according to one of the claims 1 through 6, wherein in at least one further mode the connection unit (75, 22, 225, 225') may output audio signals from all three microphones (271M,272M,25M).

8. Earphones according to one of the claims 1 through 7, wherein the microphone (25M) for acquiring speech of the user is within a microphone unit (25), and wherein the earphones further comprise an operating unit (24) connected via cables (250-262) with both ear units and the microphone unit (25), and wherein the operating unit (24) comprises one or more first switches (241) at least for switching the multimedia device into the telephone mode, and a second switching function (242) for switching between the mode (12) in which the connection unit outputs audio signals of only the microphone (25M) for acquiring speech of the user and another mode (11) in which the connection unit outputs audio signals of both microphones (271M,272M) for binaurally recording ambient sound.

9. Earphones according to claim 8, wherein the second switching function (242) is a pushbutton to be actuated by lateral sliding.

10. Earphones according to one of the claims 1 through 9, wherein the earphones comprise a switching function (243) that may switch between a plurality of transparent modes, wherein the transparent modes differ in whether and with what gain or attenuation the audio signal of a microphone (271M,272M) for binaural recording of ambient sound is switched to the sound generator (271S,272S) located in the same ear unit.

11. Earphones according to claim 10, wherein in a non-transparent mode the audio signals of the microphones (271M,272M) for binaurally recording ambient sound are not switched to the sound generators, in a first transparent mode the audio signals of the microphones (271M,272M) for binaurally recording ambient sound are attenuated and switched to the sound generators, and in a second transparent mode the audio signals of the microphones (271M,272M) for binaurally recording ambient sound are switched substantially unattenuated to the sound generators.

12. Earphones according to claim 10 or 11, wherein if the audio playback volume is increased above a threshold value, the playback volume of at least one transparent mode is also increased.

13. Earphones according to one of the claims 1 through 12, wherein after completion of a telephone call the connection unit automatically outputs audio signals of the two microphones (271M,272M) for binaurally recording ambient sound.

14. Earphones according to one of the claims 1 through 13, wherein the earphones further comprise an optical display (244) indicating whether the earphones are in a mode (12) in which the connection unit outputs audio signals of the two microphones (271M,272M) for binaurally recording ambient sound, or in a different mode (11) in which the connection unit outputs audio signals of the microphone (25M) for acquiring speech of the user.

## Revendications

1. Écouteurs pour la connexion à un dispositif multimédia (21) adapté à un mode téléphonique et un mode d'enregistrement/lecture audio, les écouteurs comprenant:
- deux unités d'oreille (271,272), où chaque unité d'oreille contient du moins un transducteur acoustique (271S,272S) et un microphone (271M,272M) pour enregistrer le son ambiant à chaque oreille d'un utilisateur;
- du moins un autre microphone (25M) pour enregistrer la parole de l'utilisateur;
- une unité de connexion (75, 22, 225, 225') adaptée pour connecter les écouteurs avec le dispositif multimédia (21);
où l'unité de connexion peut émettre, de manière sélectionnable et réglable par l'utilisateur, vers le dispositif multimédia soit les signaux audio des deux microphones (271M,272M) pour l'enregistrement binaural du son ambiant soit les signaux audio d'un autre microphone (25M) pour enregistrer la parole, et
où quand le dispositif multimédia passe en mode téléphonique, les écouteurs passent automatiquement vers un mode (12) dans lequel l'unité de connexion n'émet que des signaux de l'autre microphone (25M).

2. Écouteurs selon la revendication 1, où les écouteurs peuvent être utilisé en mode ANC pour un compensation active du bruit (ANC), et où les microphones (271M,272M) pour enregistrer le son ambiant sont utilisé en mode ANC, et où les écouteurs passent automatiquement vers un mode ANC quand le dispositif multimédia passe vers le mode téléphone.

3. Écouteurs selon la revendication 2, dans lequel les unités oreilles (271,272) comprennent chacune un autre microphone (720) situé du côté face à l'oreille, qui est également utilisé en mode ANC.

4. Écouteurs selon l'une des revendications 1 à 3, dans lequel les unités d'oreille (271,272) sont connectées chacune à un câble (261,262) et le microphone (25M) pour enregistrer la parole de l'utilisateur est disposé sur l'un des câbles.

5. Écouteurs selon l'une des revendications 1 à 4, dans lequel l'unité de connexion contient un câble (225) et un connecteur (22).

6. Écouteurs selon l'une des revendications 1 à 4, dans lequel l'unité de connexion contient un émetteur et un récepteur pour une connexion sans fil au dispositif multimédia (21).

7. Écouteurs selon l'une des revendications 1 à 6, dans lequel l'unité de connexion (75, 22, 225, 225') dans au moins un autre mode peut émettre des signaux audio de tous les trois microphones (271M,272M,25M).

8. Écouteurs selon l'une des revendications 1 à 7, dans lequel le microphone (25M) pour enregistrer la parole de l'utilisateur est dans un unité microphone (25), et dans lequel les écouteurs comprend en outre un unité de contrôle (24) connectée par des câbles (250-262) aux deux unités d'oreille et à l'unité microphone (25), où l'unité de contrôle (24) comprend un ou plusieurs premiers commutateurs (241) au moins pour passer le dispositif multimédia en mode téléphonique et une deuxième fonction de commutation (242) adaptée pour commuter entre le mode (12) dans lequel l'unité de connexion n'émet que des signaux du microphone (25M) pour enregistrer la parole de l'utilisateur et un autre mode (11) dans lequel l'unité de connexion émet des signaux audio des deux microphones (271M,272M) pour l'enregistrement binaural du son ambiant.

9. Écouteurs selon la revendication 8, dans lequel la deuxième fonction de commutation (242) est un bouton à actionner par glissement latéral.

10. Écouteurs selon l'une des revendications 1 à 9, dans lequel les écouteurs comprennent une fonction de commutation (243) qui peut basculer entre plusieurs modes transparents, les modes transparents différant à savoir si et avec quel gain ou atténuation le signal audio provenant d'un microphone (271M,272M) pour l'enregistrement binaural du son ambiant est connecté avec le transducteur acoustique (271S,272S) situé dans la même unité d'oreille.

11. Écouteurs selon la revendication 10, dans lequel dans un mode non-transparent les signaux audio des microphones (271M,272M) pour l'enregistrement binaural du son ambiant ne sont connectés pas avec les transducteurs acoustiques, dans un premier mode transparent les signaux audio des microphones (271M,272M) pour l'enregistrement binaural du son ambiant sont atténués et connectés avec les transducteurs acoustiques, et dans un second mode transparent les signaux audio des microphones (271M,272M) pour l'enregistrement binaural du son ambiant sont connectés avec les transducteurs acoustiques essentiellement sans atténuation.

12. Écouteurs selon la revendication 10 ou 11, dans lequel en augmentant le volume de la reproduction audio au-dessus d'un seuil aussi le volume de la reproduction d'au moins un mode transparent est augmenté.

13. Écouteurs selon l'une des revendications 1 à 12, dans lequel après avoir terminé un appel téléphonique, l'unité de connexion émet automatiquement les signaux audios des deux microphones (271M,272M) pour l'enregistrement binaural du son ambiant.

14. Écouteurs selon l'une des revendications 1 à 13, comprenant en outre un affichage optique (244) indiquant si les écouteurs sont dans un mode (21) dans lequel l'unité de connexion émet des signaux audios provenant des deux microphones (271M,272M) pour l'enregistrement binaural du son ambiant ou dans un autre mode (11) dans lequel l'unité de connexion émet des signaux audios provenant du microphone (25M) pour enregistrer la parole de l'utilisateur.
